(19) Europäisches Patentamt

European Patent Office

Office européen des brevets

(11) **EP 1 444 130 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(51) Int Cl.⁷: **B64C 1/00**, B64C 3/10, B64C 39/00, B64C 39/10

(21) Anmeldenummer: **02771971.5**

(22) Anmeldetag: **06.11.2002**

(86) Internationale Anmeldenummer:
**PCT/CH2002/000598**

(87) Internationale Veröffentlichungsnummer:
**WO 2003/039951 (15.05.2003 Gazette 2003/20)**

(54) **FLUGGERÄT MIT EINEM AUFTRIEB ERZEUGENDEN RUMPF**

AIRCRAFT WITH A LIFT-GENERATING FUSELAGE

AERODYNE A FUSELAGE PORTEUR

(84) Benannte Vertragsstaaten:
**AT BE BG CH CY CZ DE DK EE ES FI FR GB GR IE IT LI LU MC NL PT SE SK TR**

(30) Priorität: **06.11.2001 CH 204401**

(43) Veröffentlichungstag der Anmeldung:
**11.08.2004 Patentblatt 2004/33**

(73) Patentinhaber: **Team Smartfish GmbH**
**6371 Stans (CH)**

(72) Erfinder: **SCHAFROTH, Konrad**
**CH-3011 Bern (CH)**

(74) Vertreter: **P&TS**
**Patents & Technology Surveys SA**
**Terreaux 7**
**P.O.Box 2848**
**2001 Neuchâtel (CH)**

(56) Entgegenhaltungen:
| | |
|---|---|
| EP-A- 0 596 131 | EP-A- 0 976 651 |
| GB-A- 1 075 403 | US-A- 2 298 040 |
| US-A- 4 033 526 | US-A- 5 813 628 |

## Beschreibung

### Technisches Gebiet

Die vorliegende Erfindung betrifft ein neues Fluggerät, insbesondere ein Fluggerät das durch eine neue Form gekennzeichnet ist.

### Stand der Technik

Herkömmliche Fluggeräte weisen einen zylindrischen Rumpf für die Passagiere oder die Fracht auf, einen Tragflügel für den Auftrieb und ein Leitwerk für die Aufrechterhaltung der Flugstabilität. Die Flügel haben eine grosse Streckung, was aber den Nachteil hat, dass durch die grossen Biegemomente grosse Kräfte entstehen und der Flügel dementsprechend massiv gebaut werden muss. Das nutzbare Volumen bei herkömmlichen Fluggeräten ist bezogen auf die äusseren Abmessungen und die benetzte Oberfläche klein. Der Auftrieb, der durch grössere Flügel erzeugt wird, wird durch das zusätzliche Gewicht teilweise wieder aufgehoben.

Es wurden auch sogenannte Nurflügler (Flying Wings) beschrieben, bei welchen der Rumpf so gestaltet ist, dass auch dieser Auftrieb erzeugt. Auf das Leitwerk wird verzichtet. Man kann sogar soweit gehen und den Rumpf ganz in den Flügel integrieren, um bessere Flugleistungen zu erzielen. Während beim Schwanzfluggerät die Flugleistung vom Flügel und die Nicksteuerung sowie die Langsstabilität vom Leitwerk bewerkstelligt wird, muss ein schwanzloses Fluggerät alle drei Aufgaben mit dem Flügel erzielen. Ein wesentlicher Teil des Flügels muss diese Aufgaben übernehmen und kann nicht für die Auftriebserzeugung ausgelegt werden. Deshalb wird eine grössere Flügelfläche benötigt, als bei einem Schwanzfluggerät.

Da Nurflügler nur einen kurzen Leitwerkshebelarm haben, sind sie sehr empfindlich auf die Schwerpunktlage. Wegen der Kopplungen der Parameter sind sie schwierig auszulegen.

Bei hohen Geschwindigkeiten kann der Flügel eines Fluggeräts kleiner gehalten werden. Es ist sogar möglich, den Rumpf des Fluggerätes so auszugestalten, dass der Rumpf bei hohen Fluggeschwindigkeiten den benötigten Auftrieb selber erzeugen kann. In diesem Fall werden Flügel gar nicht mehr benötigt. Solche Fluggeräte werden Lifting Body genannt. Lifting Bodys haben wegen der geringen Streckung der Auftriebsfläche den Nachteil, dass der induzierte Widerstand bei grossen Anstellwinkeln sehr hoch werden kann. Ein weiterer Nachteil einer solchen Konstruktion ist, dass zum Starten und Landen eine hohe Geschwindigkeit benötigt wird.

EP-A-0 596 131 offenbart ein Flugobjekt, welches auf einem Luftkissen schwebt, wobei das Luftkissen beim Starten und beim Landen wirkungsvoll eingesetzt werden soll. Durch diverse Einrichtung wie bestimmte Tragflügel, eine Einrichtung zur Erzeugung eines Luftkissens, ein Kontrollsystem zur gasdynamischen Kontrolle der Grenzschichten als auch durch ein Kontrollsystem zur Kontrolle der die Hinterkante der Tragflügel verlassende Strömung sowie durch verschiedene andere Mittel wird dieses Ziel erreicht. US-A-5,813,628 offenbart ein bestimmtes Flugzeug mit einem auftrieberzeugenden Rumpf und einem Höhenleitwerk, welches unter bestimmten Bedingungen einen niedrigen Reibungswiderstand aufweist. EP-A-0 976 651 offenbart ein Flugzeug, welches einen bestimmt geformten Körper und bestimmt geformte Flügel aufweist. US-A-4,033,526 und GB-A-1 075 403 offenbaren jeweils ein Fluggerät mit einem auftrieberzeugenden Rumpf, wobei die Eintrittskanten gerade sind.

### Zusammenfassung der Erfindung

Ausgehend vom Stand der Technik ist nun das Ziel der Erfindung, ein Fluggerät vorzuschlagen, das eine kleine Streckung und somit eine kleine Spannweite hat, zugleich aber gute Gleiteigenschaften aufweist.

Ein weiteres Ziel der vorliegenden Erfindung ist die Erzielung einer guten Steuerbarkeit.

Ein weiteres Ziel der vorliegenden Erfindung ist die Erzielung eines möglichst guten Wirkungsgrades für die Triebwerksinstallation.

Ein weiteres Ziel der Erfindung ist es, einen möglicht guten Wirkungsgrad des Einlaufs und des Triebwerks für die wichtigsten Flugphasen (Start, Steigflug, Reiseflug, usw.) zu erwirken.

Ein weiteres Ziel der Erfindung ist es, ein Fluggerät mit einem möglichst guten Wirkungsgrad der Schubdüse zu bauen.

Ein weiteres Ziel der Erfindung ist es, ein Fluggerät zu bauen, in welchem der Zusatzwiderstand, der durch die Triebwerksanlage verursacht wird, reduziert wird.

Ein weiteres Ziel der vorliegenden Erfindung ist, die Betriebskosten im Vergleich zu herkömmlichen Fluggeräten zu reduzieren.

Ein weiteres Ziel der vorliegenden Erfindung ist, die Überlebenschancen der Passagiere im Falle eines Unfalls zu erhöhen.

Ein weiteres Ziel ist, die Lärmemission von solchen Fluggeräten zu verkleinern.

Ein weiteres Ziel der vorliegenden Erfindung ist die Erhöhung der wirtschaftlichen Reisegeschwindigkeit.

Ein weiteres Ziel der vorliegenden Erfindung ist die Reduzierung der Minimalgeschwindigkeit und somit eine Herabsetzung der Start und Landegeschwindigkeit eines solchen Fluggeräts.

Ein weiteres Ziel ist, einen selbststartenden Liftingbody zu bauen.

Diese Ziele werden mit einem Fluggerät erreicht, das die Merkmale des unabhängigen Anspruchs aufweist. Bevorzugte Ausführungsbeispiele werden in den abhängigen Ansprüchen angegeben.

Insbesondere werden diese Ziele durch ein Fluggerät erreicht, mit einem auftrieberzeugenden Rumpf, dessen grösste Spannweite im mittleren Drittel der Gesamtlänge liegt, und dessen Grundriss sich im vorderen Drittel und im hinteren Drittel progressiv verjüngt und Flügel aufweist. Die Fläche der Projektion beider Flügel in einer horizontalen Ebene stellt weniger als 30, vorzugsweise weniger als 20, in einer noch bevorzugten Variante weniger als 15 Prozent der Projektion in eine horizontale Ebene der gesamten Auftriebsfläche dar. Sie befinden sich am mittleren Drittel der Gesamtlänge des benannten Rumpfes. Das Fluggerät hat noch ein Höhenleitwerk am hinteren Drittel des Rumpfes, das vorzugsweise ungefähr die gleiche Spannweite hat wie das benannte mittlere Drittel des Rumpfes.

Das erfindungsgemässe Fluggerät unterscheidet sich von bekannten Fluggeräten durch eine neue Verteilung der Auftriebfläche entlang der Längsachse von herkömmlichen Fluggeräten. Das Verhältnis zwischen der Auftriebsfläche des zweiten länglichen Drittels des Fluggerätes einschliesslich den Flügeln, und der Auftriebsfläche des ersten Drittels des Fluggerätes liegt vorzugsweise zwischen 1.6 und 3.0, während das Verhältnis zwischen der Auftriebsfläche des zweiten Drittels des Fluggerätes einschliesslich den Flügeln, und der Auftriebsfläche des dritten Drittels des Fluggerätes zwischen 2.0 und 4.0 liegt. Die Auftriebsfläche des dritten Drittels des Rumpfes ist aber kleiner als die Auftriebsfläche des ersten Drittels des Fluggerätes.

Diese Konstruktion hat den Vorteil, dass sie sehr kompakt sein kann. Durch die geringe Spannweite, die durch einen auftrieberzeugenden Rumpf und kleine Flügel ermöglicht wird, sind die auf die Struktur wirkenden Momente kleiner als bei herkömmlichen Fluggeräten, so dass die Tragstruktur leichter und trotzdem stabil gebaut werden kann.

Diese Konstruktion hat auch den Vorteil, dass die Verteilung der Querschnitte des Fluggerätes entlang der Längsachse des Fluggerätes fast optimal ist, um eine höhere wirtschaftliche Reisegeschwindigkeit im transsonischen Bereich zu ermöglichen.

Die Flügel sind klein und horizontal, oder fast horizontal. Die Fläche der Projektion beider Flügel in einer vertikalen Ebene stellt weniger als 60 Prozent der Fläche der Projektion beider Flügel in einer horizontalen Ebene dar. Da ein Leitwerk vorhanden ist, lässt sich ein solches Fluggerät leicht steuern. Anstatt mit Querrudern erfolgt die Steuerung um die Längsachse nur durch gegensinnigen Ausschlag der Höhenruder.

Das Cockpit ist vorzugsweise in einer wulstartigen Verdickung auf der Rumpfoberseite angebracht, wobei die benannte Verdickung gleich lang ist wie der benannte Rumpf. Dies hat zur Folge, dass der Interferenzwiderstand zwischen Cockpit und Rumpf minimiert wird.

**Kurze Beschreibung der Figuren**

Nachfolgend werden anhand der Zeichnungen bevorzugte Ausführungsbeispiele des Erfindungsgegenstandes beschrieben.

Die Fig. 1 zeigt den Grundriss des Rumpfes.

Die Fig. 2 zeigt den Rumpf mit den Flügeln.

Die Fig. 3 zeigt den Rumpf mit übergangslos integrierten Flügeln.

Die Fig. 4 zeigt den Rumpf mit übergangslos integrierten Flügeln und mit einem Höhenleitwerk.

Die Fig. 5 zeigt drei verschiedene Ansichten des gesamten Fluggerätes mit dem Rumpf, übergangslos integrierten Flügeln und mit einem übergangslos integrierten Höhenleitwerk.

Die Fig. 6 zeigt einen Querschnitt des Fluggeräts, bei welchem vor allem das Triebwerk und die Anordnung der Lufteinlässe ersichtlich sind.

Die Fig. 7 ist eine Tabelle, die den Luftwiderstand von dreidimensional umströmbaren Körpern mit zweidimensional umströmbaren Körpern vergleicht.

**Wege zur Ausführung der Erfindung**

Eine elliptische Auftriebsverteilung ist die effizienteste Art, um mit einem ebenen Flügel Auftrieb zu erzeugen. Flügel mit kleiner Streckung habe fast elliptische Auftriebsverteilungen für einen grossen Bereich von Verjüngung und Pfeilung. Es braucht relativ viel Schränkung, damit die Auftriebsverteilung nicht mehr elliptisch ist. Flügel mit grosser Streckung sind diesbezüglich viel heikler, da braucht es nicht viel, um mit einer anderen Verjüngung des Flügels oder einer nicht ganz korrekten Schränkung des Flügels die Auftriebsverteilung zu ändern.

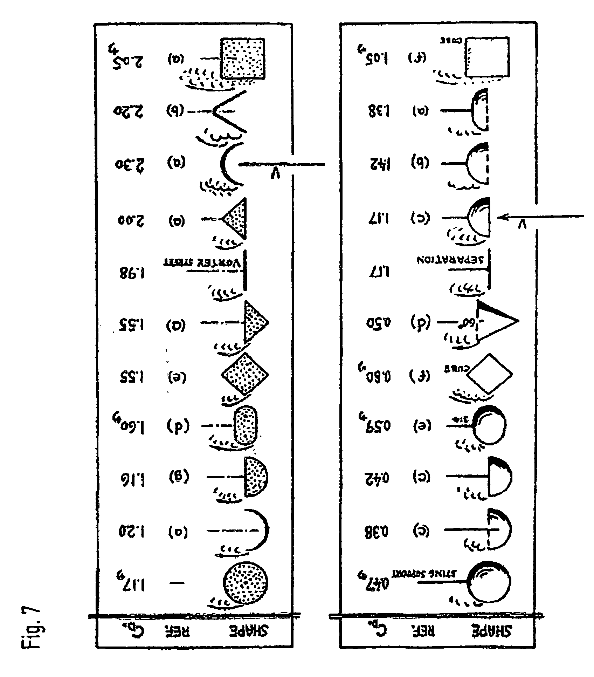

Der schädliche Widerstand von umströmten Körpern ist am kleinsten, wenn die Strömung dreidimensional um den Körper strömen kann. Beispiele hierzu sind in der Figur 7 zu finden (Quelle: Fluid Dynamic Drag /Hoerner Seite 3-17).

Ausgehend von diesen Überlegungen ist es also vorteilhaft, wenn die Auftriebsfläche so gestaltet wird, dass sie dreidimensional umströmt werden kann.

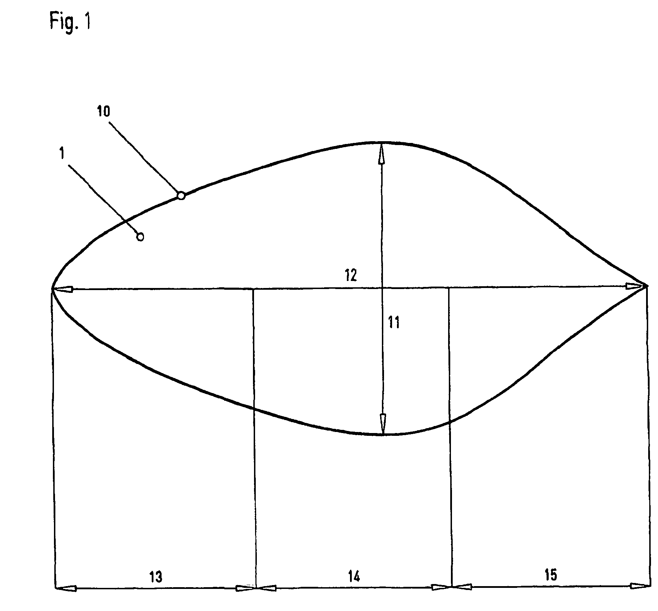

Es ist daher vorteilhaft, wenn der Grundriss der Auftriebsfläche ein aerodynamisches Profil aufweist. Dadurch kann die Strömung nicht nur über und unter der Auftriebsfläche fliessen, sondern auch seitwärts um die Auftriebsfläche. Die Figur 1 zeigt ein Beispiel des Grundrisses eines Rumpfes 1 mit einer Eintrittskante 10, der als Auftriebsfläche wirkt und nach diesem Prinzip gestaltet ist.

In diesem Falle entspricht der Grundriss des Rumpfes 1 einem symmetrischen Profil, dessen Dicke (Spannweite 11) 50% der Länge (Längsachse 12) entspricht. Hier scheint ein Wert zwischen 30 und 60%, vorzugsweise zwischen 40 und 50%, vorteilhaft zu sein. Der Rumpf 1 ist in ein vorderes Drittel 13, ein mittleres Drittel 14 und ein hinteres Drittel 15 eingeteilt.

Der Grundriss und der Seitenriss der beschriebenen Grundform haben beide aerodynamische Profile, im Gegensatz zu herkömmlichen Fluggeräten, bei welchen nur der Seitenriss aerodynamisch vorteilhaft ist.

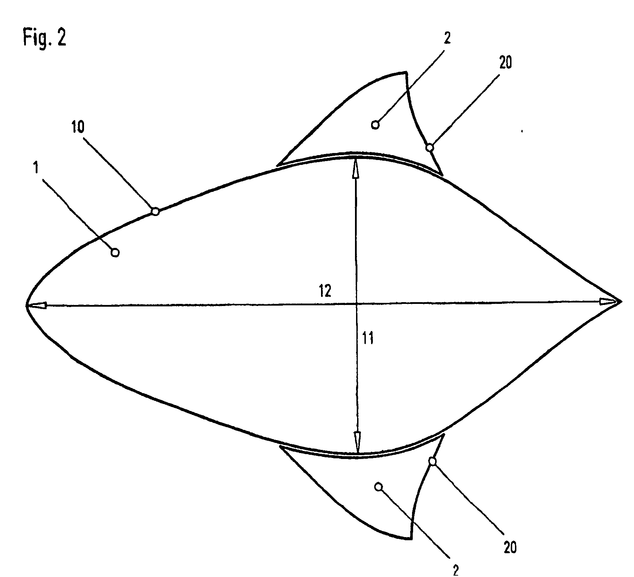

Mit diesem Grundriss ist der schädliche Widerstand minimal. Der induzierte Widerstand ist aber durch die kleine Streckung gross. Dort wo die Seitenkanten ungefähr parallel verlaufen, entsteht bei kleinen Anstellwinkeln ein Druckausgleich. Luft von der Auftriebsflächenunterseite strömt auf die Auftriebsflächenoberseite. Dieser Effekt findet schon statt, bevor die grösste Spannweite 11 erreicht ist. Je grösser der Anstellwinkel und somit der Auftrieb, umso weiter vorne beginnt die Luft von der Auftriebsflächenunterseite auf die Auftriebsflächenoberseite zu fliessen. Also muss genau an dieser Stelle ein kleiner Flügel 2 befestigt werden. Dadurch kann der induzierte Widerstand wesentlich verkleinert werden. Erfindungsgemäss sieht dann die Auftriebsfläche des Rumpfes 1 und der Flügel 2 aus wie auf der Figur 2 dargestellt.

Die Flügeleintrittskante 21 ist innen stark nach vorne gerichtet und weist eine von vorne nach hinten zuerst konkave und dann konvexe Form auf. Aerodynamische Tests haben gezeigt, dass die Flugeigenschaften optimal sind, wenn der Winkel der Tangente der benannten Kurve am Wendepunkt 23 zwischen dem konkaven Segment und dem konvexen Segment einen Winkel zwischen 35° und 55° zur Längsachse 12 des Fluggeräts aufweist, und wenn dieser Wendepunkt 23 sich ungefähr in der Mitte der Flügeleintrittskante befindet.

Die Austrittskante 20 der Flügel 2 weist hingegen am Wingtip 22 einen Winkel normal zur Längsachse 12 des Fluggeräts auf. In einer Variante variiert dieser Winkel um +/- 20°, vorzugsweise aber um /- 10°, um den normalen Winkel. So werden die Randwirbel nicht nach innen gezogen.

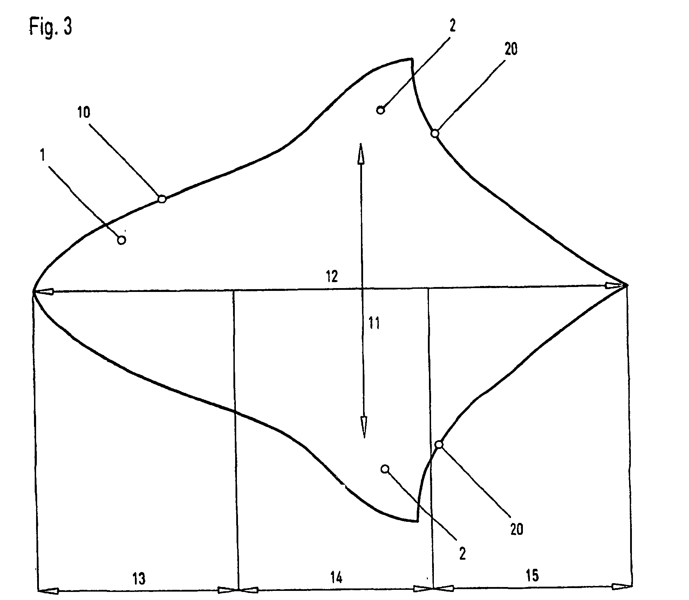

Um den Interferenzwiderstand so klein wie möglich zu halten ist der Übergang zwischen dem Rumpf 1 und den Flügeln 2 übergangslos gestaltet (Figur 3). So kann nicht genau gesagt werden, wo der Rumpf 1 aufhört und wo die Flügel 2 beginnen. Dadurch werden die Ursachen für schädliche Interferenzwiderstände weitgehend vermieden.

Eine weitere Verbesserung der Flugeigenschaften ergibt sich, wenn das Profil im Bereich der Flügel 2 so gestaltet wird, dass die Eintrittskante nach unten gezogen wird. Dies deshalb, weil der induzierte Anstellwinkel der Flügel durch die 3-D Umströmung der Auftriebsfläche grösser ist als der Anstellwinkel der restlichen Auftriebsfläche. Um nun ein Abreissen der Strömung zu verhindern respektive zu verzögern ist es von Vorteil, wenn die Eintrittskante in diesem Bereich nach unten gezogen wird. Eine andere Möglichkeit besteht darin, den Anstellwinkel im Bereich der Flügel 2 zu verkleinern, die Flügel also zum Rumpf zu schränken, oder aber im Bereich der Flügel ein gewölbtes Profil zu verwenden, oder eine Kombination dieser Massnahmen.

Die Druckverteilung wird durch diese Änderung nicht negativ beeinflusst, da bei Flügeln mit kleiner Streckung die Auftriebsverteilung über einen grossen Bereich von Schränkungen und Grundrissen weitgehend elliptisch ist.

Beste Flugleistungen (im Sinne von maximaler Gleitzahl) von Flugzeugen mit kleiner Streckung sind bei kleinen Auftriebsbeiwerten zu erzielen. Demzufolge müssen die Momentenbeiwerte auch sehr klein sein, weil sonst der Trimmwiderstand zu gross wird.

Erfindungsgemäss wird dies so gelöst, indem das longitudinale mittlere Profil ungefähr symmetrisch ist. Dies wird beispielsweise erreicht, indem das longitudinale Profil des Fluggeräts nur eine kleine Wölbung aufweist. Das longitudinale Profil der Flügel kann leicht asymmetrisch sein, wobei der Übergang von symmetrisch zu asymmetrisch fliessend ist.

Der Übergang vom symmetrischen Profil des Rumpfes zum gewölbten Profil des Flügels erfolgt fliessend.

Auch die Veranderung zwischen dem kleinen Anstellwinkel der Flügel und dem grösseren Anstellwinkel des Rumpfes erfolgt progressiv.

Durch die Verwendung von Profilen mit keiner oder nur sehr wenig Wölbung kann der Trimmwiderstand klein gehalten werden.

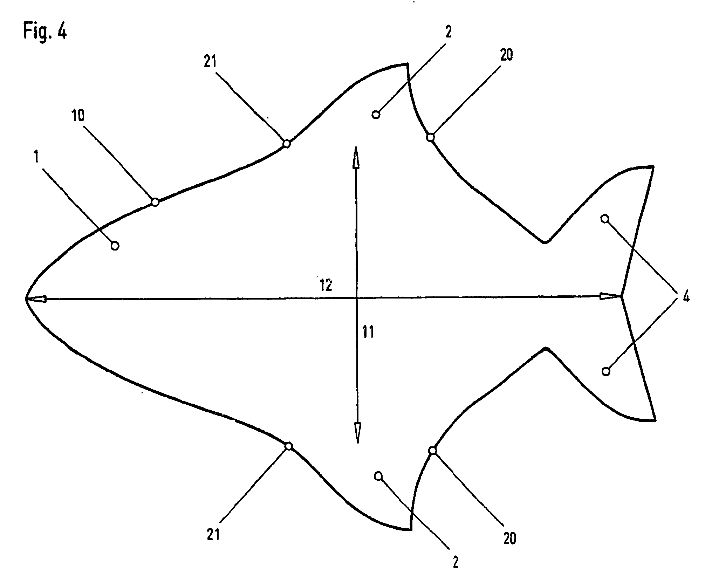

Damit das Fluggerät gesteuert werden kann ist ein Höhenleitwerk 4 notwendig. Der Hebelarm muss lang genug sein, damit mit kleinen Steuerkräften ein genügend grosses Moment erzeugt werden kann. Ein längerer Hebelarm hat ausserdem den Vorteil, dass der Trimmwiderstand reduziert wird. Damit dies gewährleistet werden kann ist es von Vorteil, wenn das Höhenleitwerk 4 möglichst weit hinten am Rumpf 1 angeordnet ist, wie auf Figur 4 dargestellt.

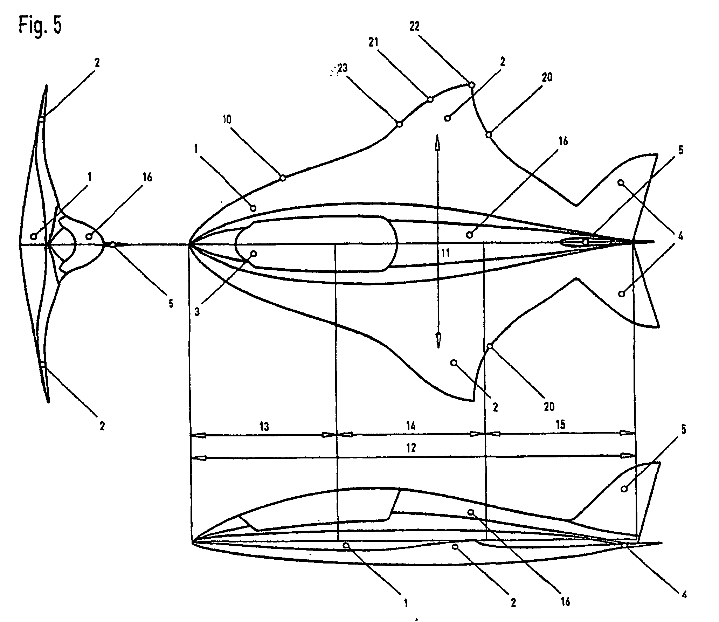

Damit kein Interferenzwiderstand auftritt, wird auch hier ein fliessender Übergang zwischen dem Rumpf 1 und dem Leitwerk angestrebt. Das Fluggerät sieht dann wie auf Figur 5 dargestellt aus.

Es kann nicht genau definiert werden, wo der Rumpf 1 aufhört und wo das Höhenleitwerk 4 beginnt. Wenn die Spannweite des Höhenleitwerks 4 gross genug gewählt wird, ist es sogar möglich, dass das Höhenleitwerk 4 auch die Funktion des Querruders übernehmen kann. Zusätzlich ist am hinteren Ende des Rumpfs 1 ein Seitenleitwerk 5 vorhanden.

Das Cockpit 3 kann teilweise in einer Verdikkung 16 auf der Oberseite des Rumpfs 1 integriert werden. Vorteilhaft ist es, wenn das Cockpit 3, die Verdikkung 16 und der Rumpf 1 ungefähr dieselbe Länge haben und wenn der Übergang zwischen Cockpit 3 und Rumpf 1 fliessend gestaltet wird, wie auf Figur 5 dargestellt:

Die Druckverteilung auf Rumpf 1 und Flügel 2 ist bei gleicher Flügel / Rumpftiefe praktisch identisch. Die Variation ist nur klein. Dies bedeutet dass es nur wenig oder keinen Interferenzwiderstand gibt.

Eine möglichst flache Auftriebsverteilung, d.h. ein möglichst gleich bleibender Auftriebsbeiwert für die ganze Auftriebsfläche, hat den weiteren Vorteil, dass dadurch das Entstehen von Stössen/Schockwellen erst bei höheren Geschwindigkeiten erfolgt als bei einer Auftriebsfläche, die eine unregelmässige Auftriebsverteilung und somit Bereiche mit einem grossen Auftriebsbeiwert hat.

Das erfindungsgemässe Design hat einige aerodynamische Vorteile:

Durch die Formgebung mit der starken Pfeilung der Eintrittskante ergibt sich eine hohe kritische Machzahl. Dies bedeutet, dass die Reisegeschwindigkeit in der Nähe der Schallgeschwindigkeit ist, womit im Vergleich zu herkömmlichen Fluggeräten mit Flügeln grosser Streckung die Reisegeschwindigkeit erhöht und somit die Reisezeit verkürzt wird. Durch die besondere Formgebung der Auftriebsfläche und die fliessenden Übergänge am gesamten Fluggerät wird der schädliche Widerstand kleiner sein als bei herkömmlichen Fluggeräten.

Durch die starke Pfeilung der Eintrittskante entstehen bei hohen Anstellwinkeln, wie sie typischerweise bei Start und Landung auftreten, Wirbel auf der Auftriebsflächenoberseite, ähnlich wie bei einem Deltaflügel. Diese Wirbel erzeugen zusätzlichen Auftrieb, so dass für ein erfindungsgemässes Fluggerät auf zusätzliche Auftriebshilfen wie Landeklappen etc. verzichtet werden kann. Dies wird noch begünstigt durch die relativ geringe Flächenbelastung, welche moderate Start und Landegeschwindigkeiten ermöglicht selbst bei kleinen Auftriebsbeiwerten.

Beim Deltaflügel können diese Wirbel unter bestimmten Bedingungen aufplatzen (Vortex Burst), so dass der Auftrieb an dieser Stelle plötzlich reduziert wird. Die beim asymmetrischem Aufplatzvorgang entstehenden Roll / Gierbewegung (Departure) beim Deltaflügel sind ein Problem, speziell für die Zulassung.

Die Form des erfindungsgemässen Fluggeräts ermöglicht es, dieses Problem zu lösen, indem die Stelle, wo Wirbel aufplatzen, durch die Formgebung der Eintrittskante definiert und symmetrisch stabilisiert wird. Zuerst nimmt die Pfeilung der Eintrittskante mit zunehmender Spannweite zu. Dies begünstigt das Entstehen eines Wirbels. Ab einer bestimmten Stelle der Spannweite wird dann die Pfeilung der Eintrittskante wieder kleiner. Der Wirbel platzt dort auf, wo die Pfeilung der Eintrittskante wieder kleiner wird, eventuell etwas dahinter.

Durch die Geometrie der Eintrittskante wird der Wirbelzusammenbruch also stabilisiert.

Die Langsamflugeigenschaften werden durch die Wirbel massgeblich beeinflusst. Je grösser der Anstellwinkel, um so stärker die Wirbelbildung auf der Auftriebsflächeoberseite. Das erfindungsgemässe Fluggerät hat daher günstige Langsamflugeigenschaften.

Dadurch, dass das Höhenleitwerk bei entsprechender Auslegung auch als Querruder verwendet werden kann, ist es nicht notwendig, am Rumpf oder am Flügel ein Querruder zu befestigen. Dies ermöglicht eine Konstruktion mit nur sehr wenigen beweglichen Teilen (Steuerflächen).

Durch den langen Hebelarm sind nur kleine Kräfte am Höhenleitwerk notwendig, um die Momente auszugleichen. So sind die Abtriebskräfte am Höhenleitwerk bei entsprechender Auslegung des Designs der Auftriebsfläche (Profil mit wenig oder gar keiner Wölbung) relativ gering, woraus sich ein geringer Trimmwiderstand ergibt. Auch ist bei einer solchen Konstruktion keine künstliche Stabilisierung notwendig.

Durch die grosse Fläche gibt es einen kleinen Ca-Auftriebsbeiwert und somit sanfte und kleine Druckveränderungen. Dadurch kann eine mindestens teilweise laminare Grenzschicht erreicht werden, so dass der Widerstand reduziert wird. Dies wird durch das Fehlen eines Vorderrumpfes und die fliessend verlaufende Eintrittskante erreicht. Die linke und die rechte Eintrittskante 10 von der Spitze des Fluggeräts bis zur grössten Spannweite bilden jeweils eine stetige Linie mit zwei Wendepunkten. Ausserdem verlaufen sowohl die die transversale Querschnittfläche als auch die transversale Umrisslänge von der Spitze des Fluggeräts bis zur grössten Spannweite fliessend und stetig. Dadurch entstehen keine Störungen wie bei einem herkömmlichen Flugzeug, bei dem die Grenzschicht des Rumpfes Störungen an der Grenzschicht des Tragflügels hervorrufen kann und die Grenzschicht von laminar auf turbulent umschlägt, so dass der Widerstand dadurch erhöht wird.

Des weiteren ist es günstig, wenn die grösste Dicke der Profile des Rumpfes und des Flügels relativ weit hinten angeordnet sind. Auch dies begünstigt die mindestens teilweise Laminarhaltung, vor allem im vorderen Bereich, dank Verschiebung des Druckminimums nach hinten.

Ein weiterer Vorteil der vorliegenden Erfindung ist, dass der Umfang bis ungefähr in die Mitte der Länge des Fluggerätes stetig zunimmt. Dies fuhrt zu einer dünnen Grenzschicht, was wiederum günstig ist, um wenig Luftwiderstand zu erzeugen.

Die kleine Flächenbelastung führt zusammen mit der gleichmässigen Druckverteilung auch zu einem kleinen minimalen Cp auf dem Rumpf. Dies wiederum ermöglicht hohe Geschwindigkeiten im transsonischen Bereich, ohne dass Stösse auftreten.

Ein weiterer Vorteil der vorliegenden Erfindung ist die sich aus dem grossen Volumen ergebenden Moglichkeiten betreffend der Triebwerkinstallation. Würde pro Triebwerk ein einziger fixer Einlauf angeordnet, entstände beim Start und Steigflug ein Schubverlust, im Reiseflug hingegen Widerstand, da ein Teil der Luft aussen um den Einlauf herumfliessen muss.

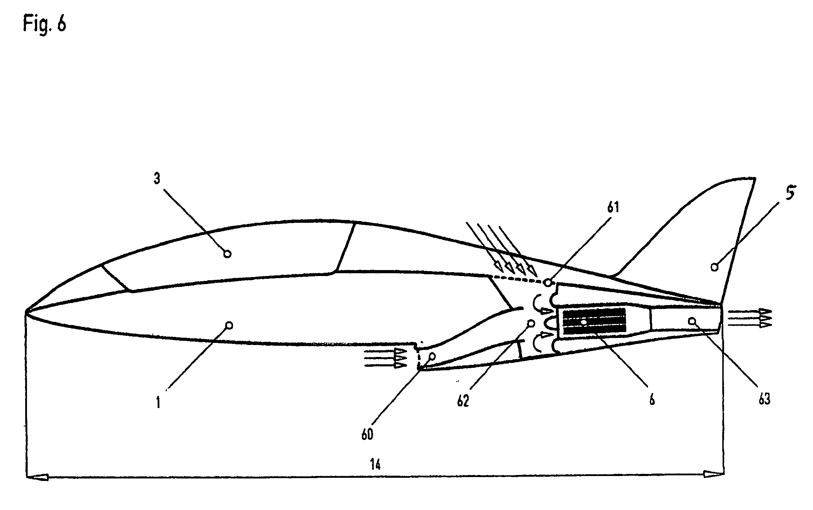

Dieses Problem wird erfindungsgemäss so gelöst, indem das oder die Triebwerke 6 in den Rumpf 1 integriert werden, wie man es auf Figur 6 sehen kann. Dies ist möglich dank dem sich aus dem Gesamtkonzept ergebenden grossen internen Volumen.

Die Integration der Triebwerke 6 in den Rumpf ermöglicht das Anbringen von Hilfs-Lufteinlässen 61 auf der Rumpfoberseite (Tragflächenoberseite). Mit diesen oberen Lufteinlässen kann der Schub beim Start, Steigflug oder wenn eine maximale Leistungsstärke benötigt wird, maximiert werden. Beim Reiseflug werden die oberen Hilfs-Lufteinlässe 61 auf der Rumpfoberseite geschlossen, so dass nur kleinere, auf der Rumpfunterseite (Tragfläche) angeordnete Lufteinlässe 60 verwendet werden. Dadurch wird der Gesamtwirkungsgrad des Antriebs erhöht, weil einerseits die Grenzschicht auf der Tragflächenunterseite dünner ist, und weil andererseits die lokale Anströmmachzahl auf der Unterseite wesentlich kleiner ist als auf der Oberseite.

Die Hilfs-Lufteinlässe 61 sind vorzugsweise gleichlaufend im Profil der Oberseite integriert; geschlossen bilden sie eine annähernd glatte Aussenfläche auf der Rumpfoberseite. Damit sie beim Reiseflug automatisch geschlossen werden, sind sie vorzugsweise mit nicht dargestellten selbsttätigen Rückschlagklappen oder Ventilen versehen. Sobald der Druck auf der Aussenseite der Rückschlagklappen kleiner als der Druck auf der Innenseite, zum Beispiel beim Reiseflug, wird, werden diese Klappen geschlossen. Beim Abheben werden aber die Ventile automatisch durch den Unterdruck geöffnet, so dass mehr Luft in die Triebwerke gelangt und ein maximaler Schub erwirkt wird.

Die Luftströme vom oberen und unteren Einlauf werden konzentrisch in einer im Rumpf integrierten Airbox 62 zusammengeführt. Der Luftstrom von dem oder den Einläufen 60 auf der Unterseite wird ins Zentrum der Airbox 62 geführt, während der Luftstrom von den oberen Hilfs-LuftEinlässen 61 über einen Ringschlitz oder eine Ringfläche nach innen geführt wird. Die Hinterkante dieses Ringschlitzes ist mit einer Lippe mit grossem Radius versehen. Diese Einlauflippe ist notwendig, damit die Strömung am Triebwerkseinlauf nicht abreisst.

In einer Variante wird der untere Lufteinlass 60 beim Startflug geschlossen, damit möglichst kein Schmutz in das Triebwerk 6 gesaugt wird. Dieser Einlauf kann beispielsweise so lange geschlossen werden, wie das Fahrwerk ausgefahren ist.

Durch diese Konstruktion der Airbox 62 mit dem Ringschlitz und der Ringfläche kann eine gleichmässigere Verteilung der Geschwindigkeit der in das Triebwerk 6 strömenden Luft erreicht werden. Als Variante oder zusätzlich dazu könnte auch ein Lochblech und/oder einen Ringschlitz in der Airbox 62 verwendet werden.

Der Gasaustritt 63 des oder der Triebwerke 6 liegt am Ende des Rumpfes 1 und hat einen kreisförmigen Querschnitt. Im Falle von zwei Triebwerken 6 hat jeder Austritt einen halbkreisförmigen Querschnitt, so dass der Austrittsquerschnitt insgesamt wiederum kreisförmig ist.

Ein weiterer Vorteil der Konstruktion ist die Tatsache, dass ein nicht dargestellter Holm hinter dem Cockpit 3 vorgesehen werden kann. Bei konventionellen Flugzeugsdesigns ist dies ein Problem. Da wird oft ein Verstärkungsholm unter dem Rumpf 1 durchgeführt, der aber zu einem zusätzlichen Luftwiderstand führt.

Das erfindungsgemässe Fluggerät hat folgende weitere Vorteile:

**Struktur**

- wenig Biegebeanspruchung der Zelle

- geringes Gewicht der Struktur

- langer Leitwerkshebelarm

- kleine Steuerflächen genügen

**Sicherheit**

- keine künstliche Stabilisierung nötig

- kein Strömungsabriss wie bei herkömmlichen Fluggeräten

- Oberfläche relativ unempfindlich auf Veränderungen, Flugsicherheit ist auch mit Eisansatz noch gewährleistet.

- Die Flügelstruktur muss keine Landungsschocks übertragen, da diese vom Fahrwerk direkt in das Rumpfgerüst eingeleitet werden.

**Wartung/Betrieb**

- Durch wenige Bauteile nur geringen Wartungsaufwand.

- keine künstliche Stabilisierung nötig, keine aufwendige Elektronik

- dank der kompakten Bauweise wenig Hangarplatz nötig

**Lärmemissionen / Umwelt**

- Keine Landeklappen, so dass die Geräuschentwicklung bei Start und Landung nicht gross sein wird.

- Die Hilfs-Lufteinlässe 61 des Triebwerks 6 für Start und Steigflug sind auf der Flügeloberseite angeordnet. Die Triebwerke 6 strahlen so in dieser lärmkritischen Flugphase weniger Lärm nach unten ab als konventionelle Triebwerksinstallationen.

- Der Treibstoff kann besser verteilt werden, somit kann der Trimmwiderstand möglichst klein gehalten werden durch Umpumpen von Treibstoff oder sequentielle Entleerung.

- Grosser Treibstoffvorrat kann mitgenommen werden, ohne dass Widerstand erzeugende Zusatztanks notwendig sind.

- Der Flügel weist eine hohe Flattersicherheit auf dank hoher Steifigkeit aus geometrischen Gründen, geringer Strukturmasse und vorzugsweise Wegfall der Querruder. Es entstehen quasi keine Biegemomente bei dieser Konstruktion. Dadurch kann das Zellengewicht sehr klein gehalten werden.

**Crashsicherheit von Fluggeräten**

Im erfindungsgemässen Fluggerät können 60 % des Strukturgewichts auf den Rumpf entfallen. Dieser kann somit stabiler gebaut werden als bei herkömmlichen Fluggeräten, was die Sicherheit der Passagiere bei leichten Unfällen erhöht.

Da die Auftriebsfläche nur eine geringe Spannweite hat und zudem eine wesentlich grössere Bauhöhe hat als der Flügel bei einem konventionellen Fluggerät, sind die auf die Struktur wirkenden Kräfte und Momente kleiner als bei konventionellen Fluggeräten. Die Triebwerke 6 befinden sich im voluminösen Auftriebskörper, und werden weder von den Flügeln 2 noch von schlanken Pylons getragen.

Wegen der geringeren Start- und Landegeschwindigkeiten, ist auch die Gefährdung für die Passagiere im Falle einer Bruchlandung geringer. Der Treibstoff wird weit entfernt von den Ansatzpunkten für Fahr- und Triebwerke mitgeführt. Die Triebwerke liegen nicht wie bei vielen konventionellen mehrmotorigen Fluggeräten unter den mit Treibstoff gefüllten Flügeln.

Gegenüber reinen Nurflügel-Fluggeräten hat die erfindungsgemässe Konstruktion den Vorteil, dass die aerodynamischen Charakteristiken des Fluggeräts wie Langsstabilität und Längskontrolle, Seitenstabilität und -kontrolle verbessert sind. Das Volumen des Rumpfs ist deutlich höher, ohne dass dabei die aerodynamische Effizienz beeinträchtigt wird. Der zulässige Schwerpunktsbereich ist deutlich grösser.

Da Auftrieb und Gewicht zu einem erheblichen Teil am selben Punkt einwirken, nämlich am Rumpf, sind die auf die Struktur einwirkenden Momente deutlich kleiner, weshalb man insgesamt eine leichtere Struktur verwenden kann.

Das erfindungsgemässe Design hat den weiteren Vorteil, wesentlich mehr Volumen aufnehmen zu können als ein üblicher Zylinder-Rumpf, wodurch der pro Passagier zur Verfügung stehende Platz vergrössert werden oder sperrige Lasten befördert werden können. Für den Einbau der Ausrüstung steht mehr Platz zur Verfügung, was die Zugänglichkeit für die Wartung verbessern kann.

Das Volumen V, das im erfindungsgemässen Fluggerät für die Fracht zur Verfügung steht, hat folgendes Verhältnis zur Länge L (12) und zur maximalen Spannweite I des Fluggeräts inklusive Flügel:

$$V = \frac{L \cdot I \cdot \sqrt{L \cdot I}}{k}$$

wobei der Faktor k zwischen 30 und 90, typischerweise um 60, liegt.

Bei gleicher Triebwerksleistung verglichen mit einem klassischen Fluggerät kann somit mehr Nutzvolumen schneller befördert werden.

Es ist selbstverständlich möglich, ein Fluggerät mit geringer Streckung zu konstruieren, das aus einer Kombination der meisten der vorgängig beschriebenen Merkmale besteht. So kann mittels der Formgebung der Auftriebsfläche der induzierte und der schädliche Widerstand herabgesetzt werden und das Höhenleitwerk kann zusätzlich dazu so angeordnet werden, dass der schädliche Widerstand weiter herabgesetzt wird. Mittels der Integration des oder der Triebwerke in den Rumpf kann ein optimaler Wirkungsgrad für die Kombination Einlauf / Triebwerk erzielt werden. So ein Fluggerät wird sehr wenig Leistung benötigen im Reiseflug, da einerseits durch die kompakte Konstruktion das Gewicht gering, andererseits der Luftwiderstand durch die vorgängig beschriebenen Massnahmen sehr klein sein wird. Zudem ist so ein Fluggerät sehr einfach aufgebaut, es sind keine Landeklappen oder ähnliches notwendig, lediglich für die Steuerung sind Quer-, Höhen- und Seitenruder notwendig. Ein Sportflugzeug könnte beispielsweise durch eine Turbine am Heck angetrieben werden. Dadurch wird die Umströmung des Rumpfes nur minimal gestört.

Es sind selbstverständlich viele verschiedene Kombinationen der beschriebenen Merkmale denkbar.

Das beanspruchte Fluggerät kann gross genug sein, um Passagiere und/oder Fracht zu transportieren, oder auch als Modelfluggerät, unbemanntes Fluggerät, Drone, usw. gebaut werden.

**Bezugszeichenliste**

| | |
|---|---|
| **1** | Rumpf |
| **10** | Eintrittskante |
| **11** | Spannweite |

| 12 | Längsachse |
|----|------------|
| 13 | vordere Drittel |
| 14 | mittlere Drittel |
| 15 | hintere Drittel |
| 16 | Verdickung |
| 2  | Flügel |
| 20 | Austrittskante |
| 21 | Flügeleintrittskante |
| 22 | Wingtip |
| 23 | Wendepunkt |
| 3  | Cockpit |
| 4  | Höhenleitwerk |
| 5  | Seitenleitwerk |
| 6  | Triebwerke |
| 60 | Lufteinlass |
| 61 | Hilfs-Lufteinlass |
| 62 | Airbox |
| 63 | Gasaustritt |

**Patentansprüche**

1. Fluggerät mit:

   einem auftrieberzeugenden Rumpf (1), der eine Spitze und eine linke und rechte Eintrittskante (10) aufweist,
   einem Höhenleitwerk (4),

   **dadurch gekennzeichnet, dass** das linke und das rechte Aussenprofil von der Spitze des Fluggeräts bis zur grössten Spannweite jeweils eine fliessende, stetige Linie mit zwei Wendepunkten bildet.

2. Fluggerät gemäss Anspruch 1, wobei die grösste Spannweite (11) im mittleren Drittel (14) der Gesamtlänge liegt, und dessen Grundriss sich im vorderen Drittel (13) und im hinteren Drittel (15) progressiv verjüngt,
   mit zwei Flügeln (2), wobei die Fläche der Projektion beider Flügel (2) in einer horizontalen Ebene weniger als dreissig Prozent der gesamten Auftriebsfläche darstellt, und wobei die Flügel sich am benannten mittleren Drittel (14) der Gesamtlänge des benannten Rumpfes (1) befinden, und
   mit dem Höhenleitwerk (4) am hinteren Drittel des Rumpfes (1).

3. Fluggerät gemäss Anspruch 2, in welchem die Fläche der Projektion beider Flügel (2) in einer horizontalen Ebene weniger als zwanzig Prozent der gesamten Auftriebsfläche darstellt.

4. Fluggerät gemäss Anspruch 2, in welchem die Fläche der Projektion beider Flügel (2) in einer horizontalen Ebene weniger als fünfzehn Prozent der gesamten Auftriebsfläche darstellt.

5. Fluggerät gemäss einem der Ansprüche 2 bis 4, in welchem die Fläche der Projektion beider Flügel (2) in einer vertikalen Ebene weniger als 60 Prozent der Fläche der Projektion beider Flügel in einer horizontalen Ebene darstellt.

6. Fluggerät gemäss einem der Ansprüche 2 bis5, in welchem das benannte Höhenleitwerk (4) ungefähr die gleiche Spannweite hat, wie das benannte mittlere Drittel (14) des Rumpfes (1).

7. Fluggerät gemäss einem der Ansprüche 2 bis 6, in welchem das Verhältnis zwischen der Auftriebsfläche des benannten zweiten Drittels des Fluggerätes einschliesslich den Flügeln, und der Auftriebsfläche des ersten Drittels des Fluggerätes zwischen 1.6 und 3.0 liegt,
   und in welchem das Verhältnis zwischen der Auftriebsfläche des benannten zweiten Drittels des Fluggerätes, einschliesslich den Flügeln, und der Auftriebsfläche des dritten Drittels des Rumpfes zwischen 2.0 und 4.0 liegt,
   wobei die Auftriebsfläche des benannten dritten Drittels kleiner ist als die Auftriebsfläche des ersten Drittels.

8. Fluggerät gemäss einem der Ansprüche 1 bis 6, mit einem Cockpit (3), das zum Teil in einer Verdickung (16) auf der Rumpfoberseite angebracht ist, wobei die benannte Verdickung (16) gleich lang ist wie der benannte Rumpf (1).

9. Fluggerät gemäss Anspruch 8, in welchem das benannte Cockpit (3) teilweise im benannten Rumpf (1) integriert ist.

10. Fluggerät gemäss einem der Ansprüche 1 bis 8, in welchem die gesamte Konfiguration fliessende Übergänge aufweist, so dass nicht genau erkennbar ist, wo der benannte Rumpf (1) aufhört und wo die benannten Flügel (2) beginnen.

11. Fluggerät gemäss einem der Ansprüche 1 bis 9, in welchem die gesamte Konfiguration fliessende Übergänge aufweist, so dass die Grenze zwischen Rumpf (1) und Cockpit (3) nicht genau erkennbar ist.

12. Fluggerät gemäss einem der Ansprüche 1 bis 10, bei welchem die Austrittskante (20) der benannten Flügel (2) am Wingtip (22) einen Winkel zwischen 60° und 120° zur Längsachse (12) des Fluggeräts aufweist.

13. Fluggerät gemäss Anspruch 12, bei welchem die Austrittskante (20) der benannten Flügel (2) am Wingtip (22) einen Winkel zwischen 70° und 110° zur Längsachse (12) des Fluggeräts aufweist.

**14.** Fluggerät gemäss Anspruch 13, bei welchem die Austrittskante (20) der benannten Flügel (2) am Wingtip (22) einen Winkel zwischen 80° und 100° zur Längsachse (12) des Fluggeräts aufweist.

**15.** Fluggerät gemäss Anspruch 14, bei welchem die Austrittskanten (20) der benannten Flügel (2) am Wingtip (22) einen Winkel von 90° zur Längsachse (12) des Fluggeräts aufweisen.

**16.** Fluggerät gemäss einem der Ansprüche 2 bis 15, bei welchem die Eintrittskante (21) der benannten Flügel (2) eine von vorne nach hinten zuerst konkave und dann konvexe Form aufweist, und in welchem der Winkel der Tangente der benannten Kurve am Wendepunkt (23) zwischen dem konkaven Segment und dem konvexen Segment einen Winkel zwischen 35° und 55° zur Längsachse (12) des Fluggeräts aufweist.

**17.** Fluggerät gemäss einem der Ansprüche 2 bis 15, in welchem die Flügel (2) einen kleineren Anstellwinkel als der auftriebserzeugen Rumpf aufweisen.

**18.** Fluggerät gemäss einem der Ansprüche 1 bis 17, bei welchem die Steuerung um die Längsachse nur durch gegensinnigen Ausschlag des benannten Höhenleitwerks (4) erfolgt.

**19.** Fluggerät gemäss einem der Ansprüche 1 bis 18, in welchem das Verhältnis zwischen der Höhe und der Länge des Fluggeräts zwischen 0,2 und 0,35 liegt.

**20.** Fluggerät gemäss einem der Ansprüche 1 bis 19, das eine Streckung von $\lambda < 3$ aufweist, wobei $\lambda = l^2 S$, und wobei I die Flügelspannweite und S die Flügelfläche darstellen.

**21.** Fluggerät gemäss einem der Ansprüche 1 bis 20, bei welchem das Verhältnis zwischen der Länge (12) und der maximalen Spannweite des Fluggeräts inklusive Flügel zwischen 0.5 und 1.5 liegt.

**22.** Fluggerät gemäss einem der Ansprüche 1 bis 21, bei welchem das Verhältnis zwischen der Länge (12) und der maximalen Spannweite des Fluggeräts inklusive Flügel zwischen 0.75 und 1.5 liegt.

**23.** Fluggerät gemäss einem der Ansprüche 1 bis 22, bei welchem das Verhältnis zwischen der Länge (12) und der maximalen Spannweite des Fluggeräts inklusive Flügel zwischen 0.7 und 1.0 liegt.

**24.** Fluggerät gemäss einem der Ansprüche 1 bis 23, bei welchem das Volumen V, das für die Fracht zur Verfügung steht, folgendes Verhältnis zur Länge L (12) und zur maximalen Spannweite I des Fluggeräts inklusive Flügel hat:

$$V = \frac{L \cdot l \cdot \sqrt{L \cdot l}}{k}$$

wobei der Faktor k zwischen 30 und 90 liegt.

**25.** Fluggerät gemäss einem der Ansprüche 1 bis 24, mit mindestens einem Triebwerk (6), das mindestens teilweise im Rumpf (1) integriert ist.

**26.** Fluggerät gemäss Anspruch 24, mit mindestens einem Triebwerkseinlauf (60) auf der Ftuggerätunterseite.

**27.** Fluggerät gemäss einem der Ansprüche 25 oder 26, mit mindestens einem zusätzlichen Triebwerkseinlauf (61) auf der Fluggerätoberseite.

**28.** Fluggerät gemäss Anspruch 27, in welchem der benannte zusätzliche Triebwerkseinlauf (61) nur beim Start und/oder Steigflug verwendet wird.

**29.** Fluggerät gemäss einem der Ansprüche 27 oder 28, in welchem der benannte zusätzliche Triebwerkseinlauf (61) eine annähernd glatte Aussenfläche auf der Rumpfoberseite bildet.

**30.** Fluggerät gemäss einem der Ansprüche 1 bis 29, mit einem kreisförmigen Triebwerkaustritt (63) am Ende des Rumpfes (1).

**31.** Fluggerät gemäss einem der Ansprüche 1 bis 30, das eine Analogie zur Form eines Fisches aufweist.

**32.** Fluggerät gemäss einem der Ansprüche 2 bis 31, in welchem die linke und die rechte Eintrittskante (10) von der Spitze des Fluggeräts bis zur benannten grössten Spannweite jeweils eine fliessende, stetige Linie mit zwei Wendepunkten bildet.

**33.** Fluggerät gemäss einem der Ansprüche 2 bis 32, in welchem die transversale Querschnittfläche von der Spitze des Fluggeräts bis zur benannten grössten Spannweite fliessend und stetig verläuft.

**34.** Fluggerät gemäss einem der Ansprüche 32 bis 33, in welchem die transversale Umrisslänge von der Spitze des Fluggeräts bis zur benannten grössten Spannweite fliessend und stetig verläuft.

**Claims**

**1.** Flight device with:

a lift-generating fuselage (1), having a tip and a left and right front edges (10),
a horizontal stabilizer (4),

**characterized in that** the left and the right outer profile from the tip of the flight device to the widest span build each a fluid continuous line with two inflexion points.

2. Flight device according to claim 1, wherein the widest span (11) lies in the middle third (14) of the total length, and whose outline tapers progressively in the front third (13) and in the rear third (15), with two wings (2), wherein the projection area of both wings (2) on a horizontal plane represents less than 30 percent of the total lifting surface and the wings are located in the middle third (14) of the total length of said fuselage (1), and with the horizontal stabilizer (4) at the rear third of the fuselage (1).

3. Flight device according to claim 2, wherein the projection area of both wings (2) on a horizontal plane represents less than 20 percent of the total lifting surface.

4. Flight device according to claim 2, wherein the projection area of both wings (2) on a horizontal plane represents less than 15 percent of the total lifting surface.

5. Flight device according to one of the claims 2 to 4, wherein the projection area of both wings (2) on a vertical plane represents less than 60 percent of the projection area of both wings on a horizontal plane.

6. Flight device according to one of the claims 2 to 5, wherein said horizontal stabilizer (4) has approximately the same span as said middle third (14) of the fuselage (1).

7. Flight device according to one of the claims 2 to 6, wherein the ratio between the lift surface of said second third of the flight device including the wings and the lift surface of the first third of the flight device is between 1.6 and 3.0, and wherein the ratio between the lift surface of said second third of the flight device including the wings and the lift surface of the last third of the fuselage is between 2.0 and 4.0, with the lift surface of said last third being smaller than the lift surface of the first third.

8. Flight device according to one of the claims 1 to 6, with a cockpit (3) that is located in a thickening (16) of the fuselage's upper side, said thickening (16) being as long as said fuselage (1).

9. Flight device according to claim 8, wherein said cockpit (3) is partially integrated in said fuselage (1).

10. Flight device according to one of the claims 1 to 8, wherein the entire configuration has fluid transitions, so that it is not exactly discernible where said fuselage (1) stops and where said wings (2) start.

11. Flight device according to one of the claims 1 to 9, wherein the entire configuration has fluid transitions, so that the boundary between fuselage (1) and cockpit (3) is not exactly discernible.

12. Flight device according to one of the claims 1 to 10, wherein the outlet edge (20) of said wings (2) on the wing tip (22) has an angle between 60° and 120° to the flight device's longitudinal axis (12).

13. Flight device according to claim 12, wherein the outlet edge (20) of said wings (2) on the wing tip (22) has an angle between 70° and 110° to the flight device's longitudinal axis (12).

14. Flight device according to claim 13, wherein the outlet edge (20) of said wings (2) on the wing tip (22) has an angle between 80° and 100° to the flight device's longitudinal axis (12).

15. Flight device according to claim 14, wherein the outlet edges (20) of said wings (2) on the wing tip (22) have an angle of 90° to the flight device's longitudinal axis (12).

16. Flight device according to one of the claims 12 to 15, wherein the front edge (21) of said wings (2) has a shape that, from front to back, is first concave and then convex, and wherein the angle of the tangent of said curves, at the inflexion point 23 between the concave segment and the convex segment, has an angle between,35° and 55° relative to the flight device's longitudinal axis (12).

17. Flight device according to one of the claims 12 to 15, wherein the wings (2) have a smaller angle of incidence than the lift-generating fuselage.

18. Flight device according to one of the claims 1 to 17, wherein the steering around the longitudinal axis occurs only through swinging in opposite direction of said horizontal stabilizer (4).

19. Flight device according to one of the claims 1 to 18, wherein the ratio between the height and the length of the flight device is between 0,2 and 0,35.

20. Flight device according to one of the claims 1 to 19, having an aspect ratio of $\lambda < 3$, wherein $\lambda = l^2/S$ and wherein l represents the wings' span and S the wings' surface.

**21.** Flight device according to one of the claims 1 to 20, wherein the ratio between the length (12) and the maximal span of the flight device including wings is between 0.5 and 1.5.

**22.** Flight device according to one of the claims 1 to 21, wherein the ratio between the length (12) and the maximal span of the flight device including wings is between 0.75 and 1.5.

**23.** Flight device according to one of the claims 1 to 22, wherein the ratio between the length (12) and the maximal span of the flight device including wings is between 0.7 and 1.0.

**24.** Flight device according to one of the claims 1 to 23, wherein the volume V available for freight has the following ratio to the length L (12) and to the maximal span I of the flight device including wings:

$$V = \frac{L \cdot I \cdot \sqrt{L \cdot I}}{k}$$

where the factor k lies between 30 and 90.

**25.** Flight device according to one of the claims 1 to 24, with at least one powering unit (6) that is at least partially integrated in the fuselage (1).

**26.** Flight device according to claim 24, with at least one powering unit engine intake (60) on the underside of the flight device.

**27.** Flight device according to one of the claims 25 or 26, with at least one additional powering unit engine intake (61) on the upper side of the flight device.

**28.** Flight device according to claim 27, wherein said additional powering unit engine intake (61) is used only during take-off and/or climbing flight.

**29.** Flight device according to one of the claims 27 or 28, wherein said additional powering unit engine intake (61) has a nearly.even outer surface on the upper side of the fuselage.

**30.** Flight device according to one of the claims 1 to 29, with a circular gas exhaust (63) at the end of the fuselage (1).

**31.** Flight device according to one of the claims 1 to 30, having an analogy to the shape of a fish.

**32.** Flight device according to one of the claims 2 to 31, wherein the left and the right front edges (10) from the tip of the flight device up to said widest span build each a fluid, continuous line with two inflexion points.

**33.** Flight device according to one of the claims 2 to 32, wherein the transversal cross section surface from the tip of the flight device to said widest span is fluid and continuous.

**34.** Flight device according to one of the claims 32 to 33, wherein the transversal outline from the tip of the flight device to said widest span is fluid and continuous.

**Revendications**

**1.** Aérodyne avec:

un fuselage (1) générant une portance, qui présente une pointe et un bord d'attaque (10) gauche et droit,
un empennage d'altitude (4),

**caractérisé en ce que** le profil extérieur gauche et droit de la pointe de l'aérodyne jusqu'à la plus grande envergure forment chacun une ligne fluide et continue avec deux points d'inflexion.

**2.** Aérodyne selon la revendication 1,
la plus grande envergure (11) étant située dans le tiers médian (14) de la longueur totale, et dont le contour s'effile progressivement dans le tiers antérieur (13) et dans le tiers postérieur (15),
avec deux ailes (2), la surface de la projection des deux ailes (2) dans un plan horizontal représentant moins de trente pour cent de la surface de portance totale, et les ailes se trouvant au dit tiers médian (14) de la longueur totale dudit fuselage (1), et
avec l'empennage d'altitude (4) au tiers postérieur du fuselage (1).

**3.** Aérodyne selon la revendication 2, dans lequel la surface de la projection des deux ailes (2) dans un plan horizontal représente moins de vingt pour cent de la surface de portance totale.

**4.** Aérodyne selon la revendication 2, dans lequel la surface de la projection des deux ailes (2) dans un plan horizontal représente moins de quinze pour cent de la surface de portance totale.

**5.** Aérodyne selon l'une des revendications 2 à 4, dans lequel la surface de la projection des deux ailes (2) dans un plan vertical représente moins de 60 pour cent de la surface de la projection des deux ailes dans un plan horizontal.

**6.** Aérodyne selon l'une des revendications 2 à 5, dans lequel ledit empennage d'altitude (4) a environ la même envergure que ledit tiers médian (14) du fuselage (1).

**7.** Aérodyne selon l'une des revendications 2 à 6, dans lequel le rapport entre la surface de portance dudit deuxième tiers de l'aérodyne y compris les ailes, et la surface de portance du premier tiers de l'aérodyne se situe entre 1.6 et 3.0, et dans lequel le rapport entre la surface de portance dudit deuxième tiers de l'aérodyne, y compris les ailes, et la surface de portance du troisième tiers du fuselage se situe entre 2.0 et 4.0, la surface de portance dudit troisième tiers étant plus petite que la surface de portance du premier tiers.

**8.** Aérodyne selon l'une des revendications 1 à 6, avec un habitacle (3), qui est placé en partie dans un renflement (16) sur la face supérieure du fuselage, ledit renflement (16) étant aussi long que ledit fuselage (1).

**9.** Aérodyne selon la revendication 8, dans lequel ledit habitacle (3) est partiellement intégré dans ledit fuselage (1).

**10.** Aérodyne selon l'une des revendications 1 à 8, dans lequel la configuration totale présente des transitions fluides, de sorte qu'il n'est pas précisément reconnaissable, où ledit fuselage (1) finit et où lesdites ailes (2) commencent.

**11.** Aérodyne selon l'une des revendications 1 à 9, dans lequel la configuration totale comprend des transitions fluides, de sorte que la limite entre le fuselage (1) et l'habitacle (3) n'est pas précisément reconnaissable.

**12.** Aérodyne selon l'une des revendications 1 à 10, dans lequel le bord de fuite (20) desdites ailes (2) à l'extrémité d'aile (22) forme un angle entre 60° et 120° avec l'axe longitudinal (12) de l'aérodyne.

**13.** Aérodyne selon la revendication 12, dans lequel le bord de fuite (20) desdites ailes (2) à l'extrémité d'aile (22) forme un angle entre 70° et 110° avec l'axe longitudinal (12) de l'aérodyne.

**14.** Aérodyne selon la revendication 13, dans lequel le bord de fuite (20) desdites ailes (2) à l'extrémité d'aile (22) forme un angle entre 80° et 100° avec l'axe longitudinal (12) de l'aérodyne.

**15.** Aérodyne selon la revendication 14, dans lequel le bord de fuite (20) desdites ailes (2) à l'extrémité d'aile (22) forme un angle de 90° avec l'axe longitudinal (12) de l'aérodyne.

**16.** Aérodyne selon l'une des revendications 2 à 15, dans lequel le bord d'attaque (21) desdites ailes (2) présente une forme, de l'avant vers l'arrière, d'abord concave et ensuite convexe, et dans lequel l'angle de la tangente de ladite courbe au point d'inflexion (23) entre le segment concave et le segment convexe forme un angle entre 35° et 55° avec l'axe longitudinal (12) de l'aérodyne.

**17.** Aérodyne selon l'une des revendications 2 à 15, dans lequel les ailes (2) présentent un angle d'attaque plus petit que le fuselage générant une portance.

**18.** Aérodyne selon l'une des revendications 1 à 17, dans lequel le pilotage autour de l'axe longitudinal a lieu uniquement par braquage en sens opposés dudit empennage d'altitude (4).

**19.** Aérodyne selon l'une des revendications 1 à 18, dans lequel le rapport entre la hauteur et la longueur de l'aérodyne se situe entre 0,2 et 0,35.

**20.** Aérodyne selon l'une des revendications 1 à 19, qui présente une élongation de $\lambda < 3$, où $\lambda = l^2/S,$ et où l représente l'envergure des ailes et S représente la surface des ailes.

**21.** Aérodyne selon l'une des revendications 1 à 20, dans lequel le rapport entre la longueur (12) et l'envergure maximale de l'aérodyne y compris les ailes se situe entre 0.5 et 1.5.

**22.** Aérodyne selon l'une des revendications 1 à 21, dans lequel le rapport entre la longueur (12) et l'envergure maximale, de l'aérodyne y compris les ailes se situe entre 0.75 et 1.5.

**23.** Aérodyne selon l'une des revendications 1 à 22, dans lequel le rapport entre la longueur (12) et l'envergure maximale de l'aérodyne y compris les ailes se situe entre 0.7 et 1.0.

**24.** Aérodyne selon l'une des revendications 1 à 23, dans lequel le volume V qui est disponible pour le fret a le rapport suivant à la longueur L (12) et à l'envergure maximale l de l'aérodyne y compris les ailes:

$$V = \frac{L \cdot l \cdot \sqrt{L \cdot l}}{k}$$

où le facteur k se situe entre 30 et 90.

**25.** Aérodyne selon l'une des revendications 1 à 24, avec au moins un réacteur (6) qui est au moins partiellement intégré dans le fuselage (1).

**26.** Aérodyne selon la revendication 24, avec au moins une entrée de réacteur (60) sur la face inférieure de l'aérodyne.

**27.** Aérodyne selon l'une des revendications 25 ou 26, avec au moins une entrée de réacteur supplémentaire (61) sur la face supérieure de l'aérodyne.

**28.** Aérodyne selon la revendication 27, dans lequel ladite entrée de réacteur supplémentaire (61) n'est utilisée qu'au démarrage et/ou en vol ascendant.

**29.** Aérodyne selon l'une des revendications 27 ou 28, dans lequel ladite entrée de réacteur supplémentaire (61) forme une surface externe approximativement lisse sur la face supérieure du fuselage.

**30.** Aérodyne selon l'une des revendications 1 à 29, avec une sortie de réacteur (63) circulaire à la fin du fuselage (1).

**31.** Aérodyne selon l'une des revendications 1 à 30, qui présente une analogie à la forme d'un poisson.

**32.** Aérodyne selon l'une des revendications 2 à 31, dans lequel les bords d'attaque (10) gauche et droit de la pointe de l'aérodyne jusqu'à ladite plus grande envergure forment chacun une ligne fluide et continue avec deux points d'inflexion.

**33.** Aérodyne selon l'une des revendications 2 à 32, dans lequel l'aire de la section transversale de la pointe de l'aérodyne jusqu'à ladite plus grande envergure se développe de manière continue et fluide.

**34.** Aérodyne selon l'une des revendications 32 à 33, dans lequel la longueur transversale du contour de la pointe de l'aérodyne jusqu'à ladite plus grande envergure se développe de manière continue et fluide.

Fig. 1

Fig. 2

Fig. 3

Fig. 4

EP 1 444 130 B1

Fig. 5

18

Fig. 6

## Fig. 7

| SHAPE | REF. | $C_{D_\circ}$ |
|---|---|---|
| STING SUPPORT | | $0.47_{g}$ |
| | (c) | 0.38 |
| | (c) | 0.42 |
| 3/4 | (e) | $0.59_{g}$ |
| CUBE | (f) | $0.80_{g}$ |
| 60° | (d) | 0.50 |
| SEPARATION | | 1.17 |
| V | (c) | 1.17 |
| | (b) | 1.42 |
| | (a) | 1.38 |
| CUBE | (f) | $1.05_{g}$ |

| SHAPE | REF. | $C_{D_\circ}$ |
|---|---|---|
| | — | $1.17_{g}$ |
| | (a) | 1.20 |
| | (g) | 1.16 |
| | (d) | $1.60_{g}$ |
| | (e) | 1.55 |
| | (a) | 1.55 |
| VORTEX STREET | | 1.98 |
| | (a) | 2.00 |
| V | (a) | 2.30 |
| | (b) | 2.20 |
| | (a) | $2.05_{g}$ |